# EUROPEAN PATENT SPECIFICATION

(11) **EP 4 109 068 B1**
(45) Date of publication and mention of the grant of the patent: **03.07.2024**
(21) Application number: 22183099.5
(22) Date of filing: 03.01.2019
(51) Int. Cl.: G01N 1/22, G01N 1/24

(54) **PORTABLE AIR SAMPLER**
TRAGBARER LUFTPROBENEHMER
ÉCHANTILLONNEUR D'AIR PORTABLE

(30) Priority: 07.02.2018 US 201862627502 P; 15.02.2018 US 201815897914
(43) Date of publication of application: 28.12.2022
(62) Divisional of application: 19750999.5
(73) Proprietor: Veltek Associates, Inc., Malvern, Pennsylvania 19355-1234 (US)
(72) Inventor: Kocher, Nathan G., Glen Mills, 19342 (US); Vellutato, Arthur L., Jr., West Chester, 19380 (US); Churchvara, Jeffrey, Downingtown, 19335 (US); Phillips, Mark A., King of Prussia, 19406 (US)
(74) Representative: P&TS SA (AG, Ltd.)

(56) References cited:
- US-A- 5 693 895
- US-A1- 2015 355 000
- US-A1- 2016 002 700

## Description

### Field of the Invention

The present invention relates to a device for collecting and analyzing air samples in a controlled, indoor environment. In particular, the present invention relates to devices for collecting, processing, and analyzing air samples in clean rooms and remotely monitoring, logging, and controlling the sampling device.

### Background of the Related Art

Controlled environments such as hooded areas and clean rooms (collectively referred to as "clean rooms") found in manufacturing, research, and other facilities are typically classified into two broad categories based on the static air pressure inside the rooms relative to atmospheric pressure and/or based on the air pressure in spaces adjacent the clean rooms. A positive air pressure room is maintained at an absolute air pressure greater than atmospheric pressure, greater than the air pressure in spaces adjacent the clean room, or both. The positive air pressure in such rooms is provided by pumping filtered and/or conditioned air into the rooms and controlling the flow of air out of the rooms. The adjacent spaces, which may be manufacturing facilities or offices, are typically maintained at or close to atmospheric pressure by heating, ventilation, and air conditioning (HVAC) systems, or by providing an opening to the environment that allows the adjacent spaces to equilibrate with atmospheric pressure. Thus, air flowing from the positive pressure clean room will flow toward the lower pressure in adjacent rooms or to the atmosphere.

When a positive air pressure clean room is breached, air flowing to adjacent spaces or the atmosphere is generally not a problem as long as airborne contaminants present in the clean room do not pose a potential adverse health effect to people in the adjacent spaces. Typically, the air inside clean rooms in which electronics, aerospace hardware, optical systems, military equipment, and defense-related research are manufactured or conducted may not contain airborne gases, vapors, and particulate matter at concentrations that present a safety or health concern to human health or the environment. However, that is not always the case, as other operations within those industries may generate contaminants that are above acceptable levels and, therefore, must be prevented from escaping the clean room without treatment.

A negative air pressure room is maintained at an absolute air pressure that is either less than atmospheric pressure, less than the air pressure in spaces adjacent the clean room, or both. The negative pressure is maintained by pumping air out of the room at a rate faster than that at which filtered and/or conditioned air is pumped into the room. Negative pressure rooms are often used when there is a concern that contaminants in the air in the room may pose a potential health threat to human health in adjacent spaces or the environment.

Notwithstanding the human health and environmental implications, certain types of manufacturing and research operations must be conducted within a positive air pressure clean room to satisfy regulatory requirements and industry-adopted good manufacturing and laboratory quality control standards. For example, state and federal regulations, including those promulgated by the National Institute for Occupational Safety and Health (NIOSH), may necessitate the use of positive or negative pressure clean rooms.

In particular, the U.S. Food & Drug Administration (FDA) requires that pharmaceutical production be done within the confines of clean rooms that provide for the validation and certification that manufactured batches of pharmaceutical products are being produced in a sanitary environment.

Various FDA regulations and standards also specify requirements for air sampling and/or air monitoring equipment to be used inside clean rooms to verify or validate the cleanliness of the facility during certain drug manufacturing activities. The regulations also provide for electronic data recording, accuracy, precision, and record-keeping relating to monitoring the air quality within clean rooms. Similar requirements are imposed on other industries, such as the biotechnology industry.

A number of patents and published applications teach systems for air sampling and monitoring in clean rooms and for monitoring and controlling one or more air sampling devices from a central location, such as for instance U.S. Patent Nos. 9285,792, 9063040, 9046453, and U.S. Patent Publication No. 2016/0061796. US2015/355000 A1 discloses systems and methods for accurate sensing of particle concentrations in fluids by employing a particle impactor system that allows for collection, growth and analysis of biological particles.

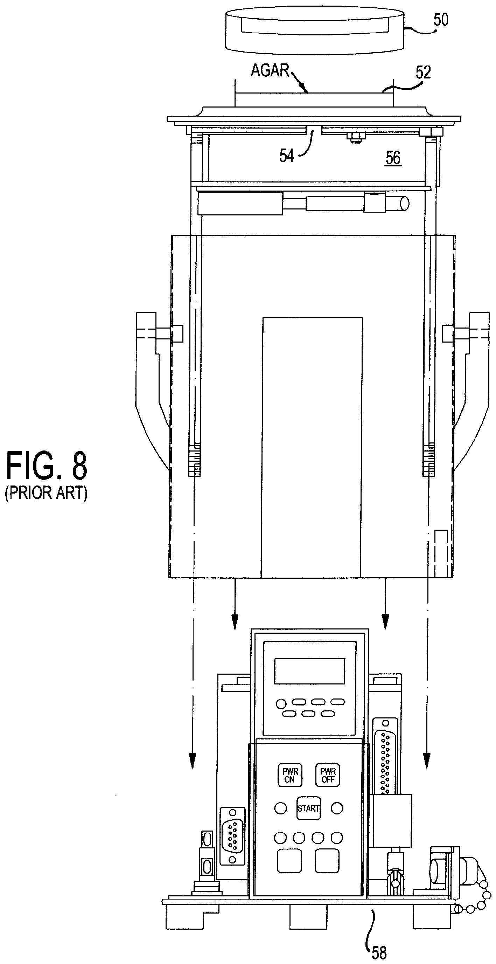

In addition, the Assignee Veltek Associates Inc. offers the portable sampling device shown in FIG. 8. As shown, air is drawn in through an atrium 50, across an agar media plate 52, and through an opening 54 at the bottom of the atrium rest. After passing through the hole 54, the air is drawn through a large fan 56 and exhausted through the body of the unit across the electronics and out of the bottom 58. The device is configured to operate at a constant fan speed that is proportional to the desired flow rate.

### SUMMARY OF THE INVENTION

An air sampling device according to claim 1 is disclosed. Advantageous features are disclosed in the dependent claims.

The invention, as well as many of the intended advantages thereof, will become more readily apparent when reference is made to the following description, taken in conjunction with the accompanying drawings.

### BRIEF DESCRIPTION OF THE FIGURES

A more complete appreciation of the invention and many of the attendant advantages thereof will be readily obtained as the same becomes better understood by reference to the following detailed description when considered in conjunction with the accompanying figures, wherein:
FIG. 1 shows a bottom perspective external view of an exemplary air sampling device;
FIG. 2 shows an internal cross-sectional view of an exemplary air sampling device;
FIG. 3A shows an internal cross-sectional view of the upper chamber of an exemplary air sampling device, showing air entering the device;
FIG. 3B shows an internal cross-sectional view of the upper chamber of an exemplary air sampling device, showing air impinging on the media plate;
FIG. 3C shows an internal cross-sectional view of the upper chamber of an exemplary air sampling device, showing air moving past the fan, the mass flow meter, and exiting the device through ventilation slots;
FIG. 3D shows an internal cross-sectional view of the upper chamber of an exemplary air sampling device, showing air moving past the fan, the mass flow meter, and exiting the device through the exhaust port;
FIG. 4A shows a top external perspective view of an exemplary air sampling device;
FIG. 4B shows an exploded top external perspective view of an exemplary air sampling device;
FIG. 5 is an exploded view of the retaining assembly;
FIG. 6A is a top view of the device showing the atrium and media plate retaining assembly in an inner position;
FIG. 6B is a top view of the device showing the atrium and media plate retaining assembly in an outer position;
FIG. 7A shows the device in a vertical position and installed on a tripod;
FIG. 7B shows the device in a horizontal position and installed on a tripod;
FIG. 8 is a conventional sampling device;
FIG. 9 shows an internal cross-sectional view of an air sampling device according to the claimed invention; and
FIG. 10 is an internal cross-sectional view of the upper chamber of the air sampling device illustrated in FIG. 9, showing air entering the device, impinging on the media plate, moving through the plenum and past the fan to the mass flow meter via a flow connection, and exiting the device through an exhaust.

### DETAILED DESCRIPTION OF THE PREFERRED EMBODIMENTS

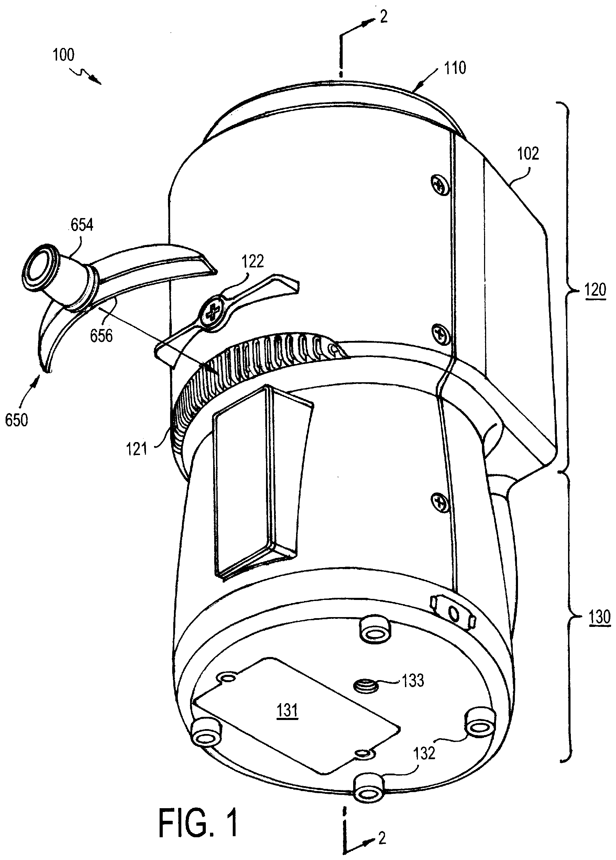

FIGS. 1-2 show an exemplary air sampling device 100. The device 100 is portable so it can be carried and placed at various locations within a controlled environment. As used herein, "air" refers generically to any and all gases, vapors, and particulates. The air sampling device 100 is especially useful to test for microscopic particulates in a clean room. The device 100 generally includes a sampler housing unit and a main body or housing 102. The sampler housing unit 110 can be any suitable device, such as a cover. In the example shown is a Sterilizable Microbial Atrium (SMA) 110 that covers a media plate 114 that samples particulates in an air flow and can be autoclaved or otherwise sterilized. The atrium 110 protects the media plate 114, but allows air to flow through the atrium 110 to contact the media plate 114. The atrium 110 can be sterilized by heat or steam, and can be autoclaved. The sampling device 100 is configured for use in a clean environment such as a clean room.

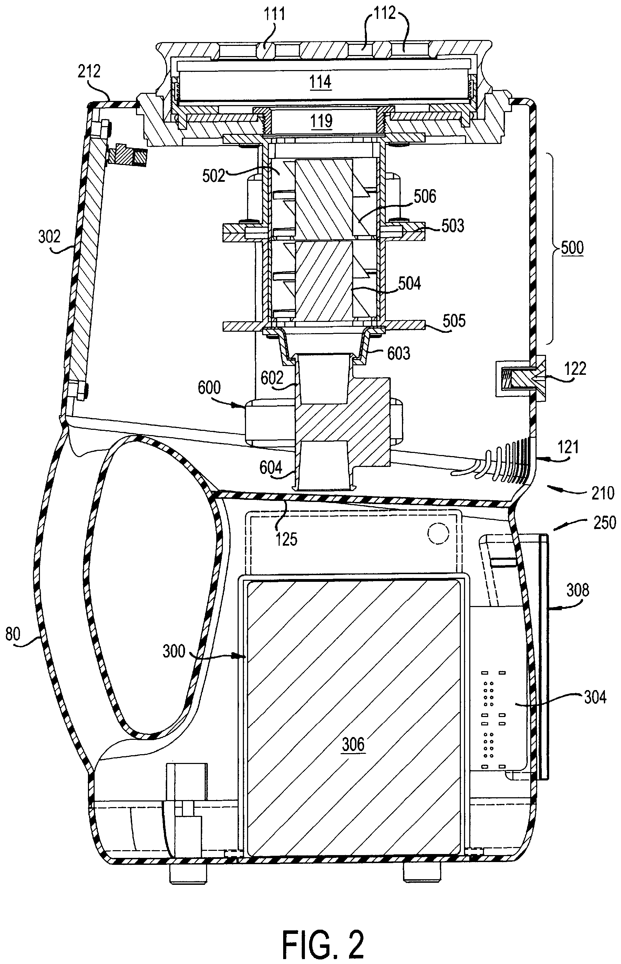

The housing 102 is generally cylindrical in shape and has an upper body 120 and a lower body 130. As best shown in FIG. 2, the upper body 120 defines an upper interior space or upper chamber 210 that houses a blower assembly 500, and the lower body 130 defines a lower interior space or lower chamber 250 that houses certain electronic components 300. A wall or partition 125 separates the upper chamber 210 from the lower chamber 250. The entire main housing 102 is a single integral member. A handle 80 (FIG. 2) can be provided to carry the portable device 100. As shown, the handle 80 can connect from the bottom of the upper housing body 120 to the bottom of the lower housing body 130.

### Upper and Lower Chambers 210, 250

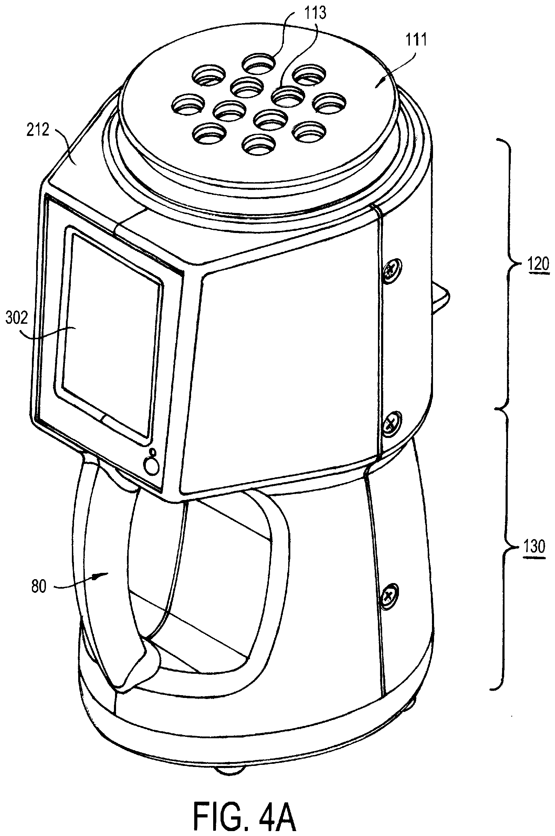

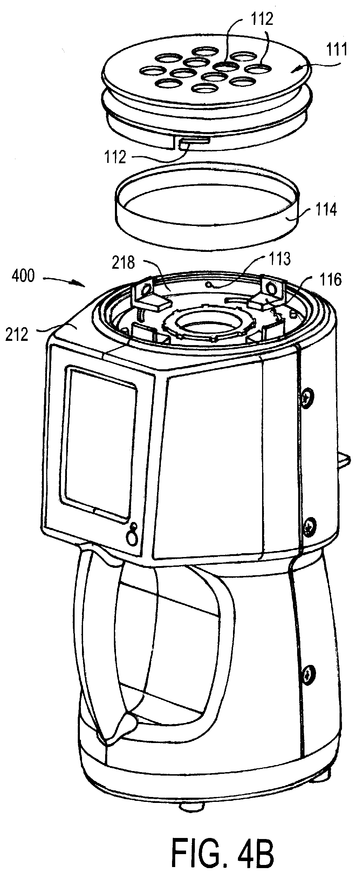

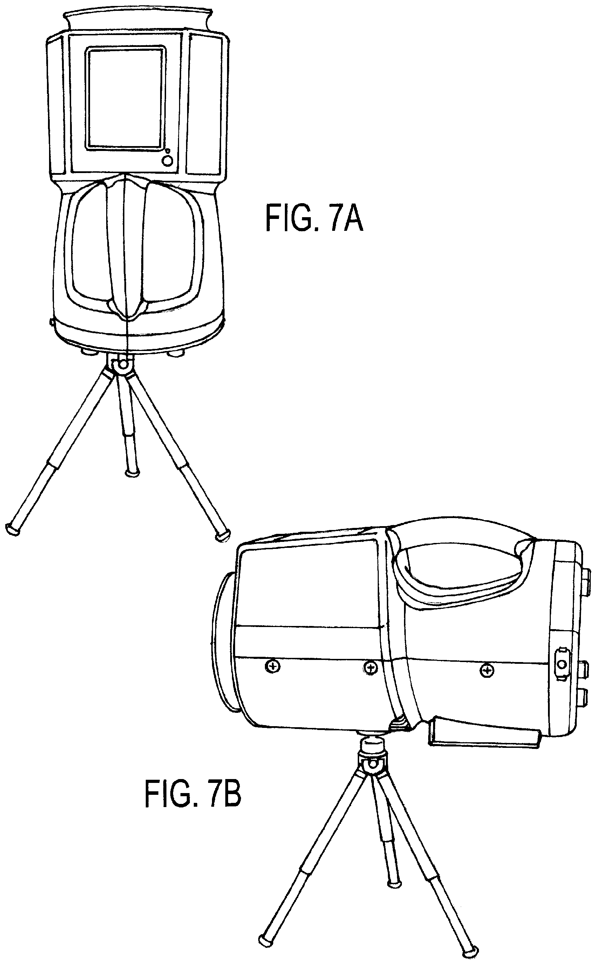

The upper chamber 210 has a top 212 (FIGS. 4A, 4B), front (FIGS. 4A, 4B), rear (FIG. 1), and opposing sides that join the front and the rear. As best shown in FIGS. 4A, 4B, the top 212 of the upper chamber 210 removably couples to the atrium 110. Returning to FIGS. 1, 2, an elongated ventilation slot 121 and a support stand 122 are positioned at the rear of the upper chamber 210. The support stand 122 is an elongated member that receives a screw to fasten the stand 122 to the upper chamber 210. The stand 122 can be elongated and is configured to allow the device 100 to be level when in the substantially horizontal position, and to prevent the device 100 from inadvertently rolling or tipping to one side. In addition, a fastening mechanism such as an opening can be provided on the rear of the device 100 that is configured to mate with a tripod (FIG. 7B) to allow the air sampling device 100 to stand in a horizontal configuration. The fastening mechanism can be a threaded opening that threadably mates with a screw of the tripod.

The lower chamber 250 has a controller access panel 131, a plurality of vertical supports 132, and a vertical tripod receiver 133 (FIG. 7A). The access panel 131 provides access to the controller and may also provide an access point for a USB slot, and or a battery. The plurality of vertical supports 132 are situated along the bottom of the air sampling device 100 such that it is stable when free-standing. The vertical supports 132 may be coated with a high-friction material like rubber or a similar synthetic polymer in order to present the air sampling device 100 from sliding along a surface. The vertical tripod receiver 133 is configured to mate with a tripod (not shown) to allow the air sampling device 100 to stand in a vertical configuration. In certain examples, the vertical tripod receiver 133 is threaded, such that it will screw into the tripod. Thus, the device 100 can either stand vertically on supports 132 or be threaded to a tripod by the receiver 133. The device 100 can also stand horizontally on support stand 122, or be threaded to a tripod by a threaded receiver.

### Retaining Assembly 400

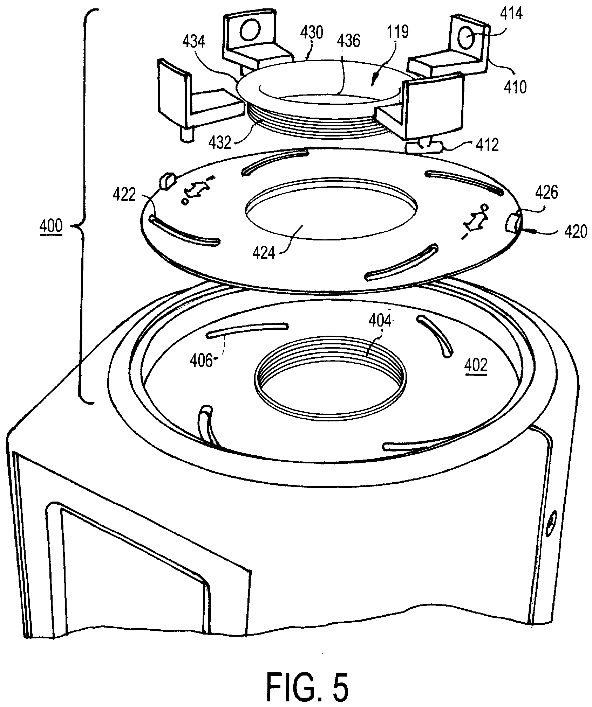

Turning to FIG. 4B, a receiving or retaining assembly 400 is provided at the top 212 of the upper chamber (which is also the top of the sampling device 100). The retaining assembly 400 is fitted to a depressed section of the top 212 having a side wall 218 and a bottom. One or more projections 113 are formed in the side wall 218. As best shown in FIG. 5, the retaining assembly 400 is shown having a central securing member 430, a top plate or disk 420, and a bottom or bottom plate 402, and one or more clips 410.

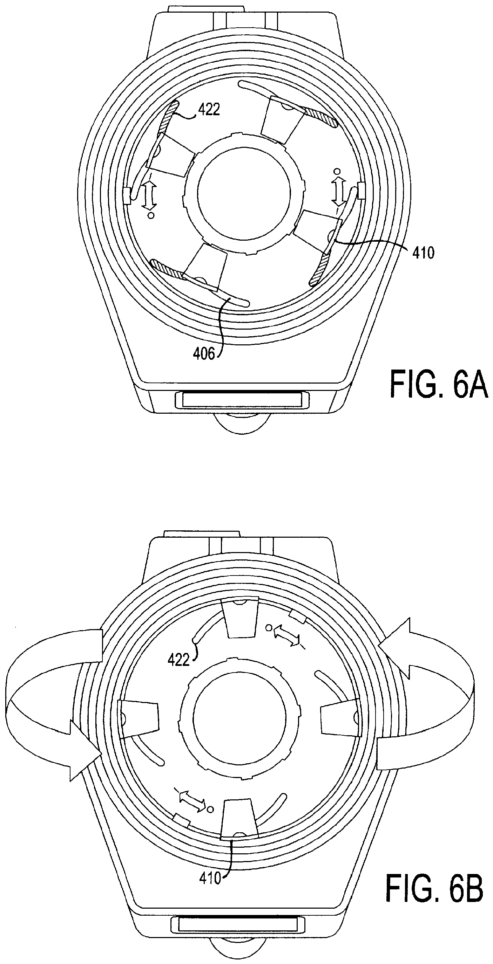

The bottom plate 402 has one or more curved elongated grooves or bottom channels 406 that are formed as slots in the bottom plate 402. The bottom plate 402 is fixed at the top 212 of the housing 102. The top plate 420 has one or more curved elongated grooves or top channels 422 that are formed as slots in the top plate 420. The top plate 420 can rotate with respect to the bottom plate 402, which remains fixed to the housing 102. One or more handles 426 can be provided on the top surface of the top plate 420. The handles 426 extend upward from the top surface of the top plate 420, so that the user can grip or push on one or more (two in the example of FIG. 5) of the handles 426 to rotate the top plate 420. Each one of the top channels 422 is aligned with and overlap with a respective one of the bottom channels 406; however the top channels 422 are flipped in orientation with respect to the bottom channels 406, as best shown in FIG. 6A, to form a Longworth chuck configuration. The channels 406, 422 are each a curved arc that together form a spiral-like shape. Small plastic or silicon bumpers can optionally be provided on the clip 410 that grip the agar plate 114 so that the plate 114 is compressed between the clips 410. The compression holds the agar plate 114 in position even when the device 100 is horizontal or inverted.

A clip 410 is positioned in each of the respective top and bottom channels 422, 406. The clip 410 has a bottom and a side formed perpendicular to the bottom to generally form an L-shape. A peg or support member 412 extends outward from the bottom of the clip 410. The support 412 has a neck and a head that forms an inverted T-shape, with the neck extending substantially perpendicular to the bottom of the clip 410 and the head is substantially perpendicular to the neck and parallel to the bottom of the clip 410. The neck of the support 412 extends through the top channel 422 and through the bottom channel 406. The head of the support 412 is wide and is positioned on the bottom side of the bottom channel 406. That locks the top plate 420 to the bottom plate 402 and also locks each clip 410 to the housing 102 and to a respective pair of bottom and top channels 406, 422. It is noted, however, that the head of the support member 412 need not sit on the opposite side of the bottom plate 402 and need not lock the plates 402, 420. Instead, the head of the support member 412 can just be received in the bottom channel 406 without extending through the bottom channel 406, so that the head can slide within the bottom channel 406.

As illustrated, the bottom and top channels 406, 422 extend slightly outward from the center so that the clip 410 moves toward and away from the center as the clip 410 slides left / right within the channels 406, 422. Each channel 406, 422 has an innermost position (closest to the central opening 119) and an outermost position (furthest from the central opening 119). As the clips 410 move in the channels 406, 422, the clips 410 continue to face in the same direction. That is, the side of the clip 410 faces the center and is substantially concentric (or parallel) to the central opening 119. As the top plate 420 rotates, all of the clips 410 move together simultaneously within their respective channels and are equidistant from the central opening 119. This provides a desired minimum and maximum diameter for the clips 410. Referring to FIG. 6A, the clips 410 are shown at an inner position where the clips 410 are situated in the innermost position of the respective channels 406, 422. In FIG. 6B, the clips 410 are shown at the outer position where the clips 410 are situated in the outermost position of the respective channels 406, 422. The clips 410 are moved between the inner and outer positions by rotating the top plate 420 with respect to the bottom plate 402. In one example, the inner position can provide a diameter of 85mm, and the outer position can provide a diameter of about 100mm, which are common sizes for media plates.

The securing member 430 has a neck 432, wide head 434, and is ringshaped to form a central opening 436. The bottom plate 402 and top plate 420 each have a respective central opening 404, 424. The plates 402, 420 are circular, and form a donut-shape with the central openings 404, 424. The bottom central opening 404 can be internally threaded. The neck 432 of the securing member 430 can be externally threaded to mate with the threaded central bottom opening 404.

The neck 432 extends through the top plate central opening 424 and threadably engages the bottom plate central opening 404, thereby locking the top plate 420 to the bottom plate 402, but allowing the top plate 420 to rotate with respect to the bottom plate 402. However, the securing member 430 sufficiently compresses the head of the support member 412 between the top plate 420 and the bottom plate 402 to provide enough friction so that the clips 410 stay in the position set by the user and grip the agar plate 114 without inadvertently sliding in the channels 406, 422 and thereby being locked in position. The securing member 430 can be curved to be ergonomic and tapered inward to facilitate the flow of air into the central opening 119 that extends through the securing member central opening 436, top plate central opening 424, and bottom plate central opening 404.

As further shown in FIG. 4B, a test or sampling device such as a Petri dish or Agar media plate 114 is provided having a test medium contained therein. The media plate 114 is placed on the bottom portion of the clips 410. The clips 410 hold the media plate 114 in place. The clips 410 slide in/out in the grooves 406, 422 so that the dish 114 snugly fits between the clips 410 and does not inadvertently come free from the clips 410, such as when the device 100 is turned horizontally. The media plate 114 can, for example, contain agar media that is designed to capture particulates in the air entering the device 100. The captured particulates can then be analyzed.

Thus, the adjustable clips 410 are configured to slide inwardly and outwardly along the diameter of the base of the atrium 110 to accommodate agar media plates 114 of varying diameters. Once the diameter is adjusted to match that of the agar media plate 114, the pegs 414 of the adjustable clips 410 can be moved from an unlocked position to a locked position, securing the agar media plate 114. The pegs 414 are positioned such that they grab the outer edge of the agar media plate 114. The pegs 414 each have a slight angle which, when the pegs 414 are positioned at roughly the diameter of the plate, causes an inward force against the walls of the agar media plate 114, securing it. Thus, the media plate 114 is press fit into the clips and is retained by the pegs 414.

### Atrium 110

Referring to FIGS. 2, 4A, 4B, the atrium 110 is removably coupled to the top 212 of the sampling device 100 and is in direct air flow communication with the upper chamber 210. The atrium 110 has a cover plate 111 with a flat top and downwardly extending sides that are wider than the clips 410. A plurality of openings 112 are formed in the top of the cover plate 111. Referring to FIG. 4B, one or more locking slots or channels 112 are formed in the side of the cover plate 111. Each of the locking channels 112 is aligned with a respective projection 113 on the side wall 218 of the receiving portion 216. The locking channel 112 has a vertical portion and a horizontal portion.

To attach the atrium 110 to the housing 102, the user places the atrium 110 over the top of the media plate 114 so that the projection 113 enters the vertical portion of the locking channel 112. Once the projection is fully received in the vertical portion of the locking channel 112, the user can rotate the atrium 110 so that the projection 113 enters the horizontal portion of the locking channel 112, thereby removably locking the atrium 110 to the main housing 102 (FIG. 4A). The entire device 100 can be placed horizontally and the atrium 110 will continue to be fixed to the top 212 of the main housing 102. The user can remove the atrium 110 by twisting the atrium 110 and pulling outward, so that the projection slides out along the horizontal portion and then pulls out from the vertical portion of the locking channel 112.

### Blower Assembly 500

Referring to FIG. 2, a blower assembly 500 is provided in the upper chamber 210 of the air sampling device 100. The blower assembly 500 has a blower housing 502 and a fan 504. The blower housing 502 is a plenum that conveys air. The plenum 502 has at least one wall and in the example of FIG. 2 is cylindrical in the form of a tube with two open ends. The blower housing 502 can be a single integral device, or multiple separate discrete housings that are coupled together by lips 503, 505 extending outward at the end of each respective housing. Thus the top lip 503 of the first housing can be coupled to the top 112 of the housing 102, and the bottom lip 503 of the first housing can be coupled to the top lip 505 of the second housing, as shown. The bottom lip 505 of the second housing can be coupled to the mass flow detector or detector adapter. A gasket can optionally be provided between the lips 503, 505 and the respective connections to provide an airtight seal therebetween so air does not leak out of the plenum 502. Thus, the plenum 502 has a top end and a bottom end opposite the top end. The top end of the plenum 502 is coupled to the top of the housing 102 about the central opening 119, so that the plenum 502 is in air flow communication with the retaining assembly 400 and atrium 110. The plenum 502 is substantially the same size as the central opening 119, and perhaps slightly larger. Thus, the fan 504 to pull air directly through the atrium 110 and retaining assembly 400 via the central opening 119.

A fan 504 is located inside the plenum 502. The fan 504 has a center support rod and fan blades 506. The center rod has a longitudinal axis that extends substantially parallel to the longitudinal axis of the sampling device 100. The fan blades 506 extend outward from the center rod and are configured to draw air down (in the example of FIG. 2, when the sampling device 100 is standing vertical or upright) through the plenum 502. The upper chamber 210 is sized and shaped to accommodate and match standard sized and shaped agar media plates 114, as well as the electronic components in the bottom chamber 250.

Thus, the blower assembly 500 is elongated and has a longitudinal axis that is parallel to the longitudinal axis of the sampling device 100. Accordingly, the longitudinal axis of the blower assembly 500 (including the fan 504 and plenum 502) is vertical when the sampling device 100 is vertical (FIG. 7A), and is horizontal when the sampling 100 device is horizontal (FIG. 7B). The plenum 502 and fan 504 can be smaller than the media plate 114 to create an air flow through the atrium 111 that provides reliable test results for the media plate 114. As shown, the plenum 502 and fan 504 can be about half the size of the media plate 114, and is centrally located with respect to the media plate 114.

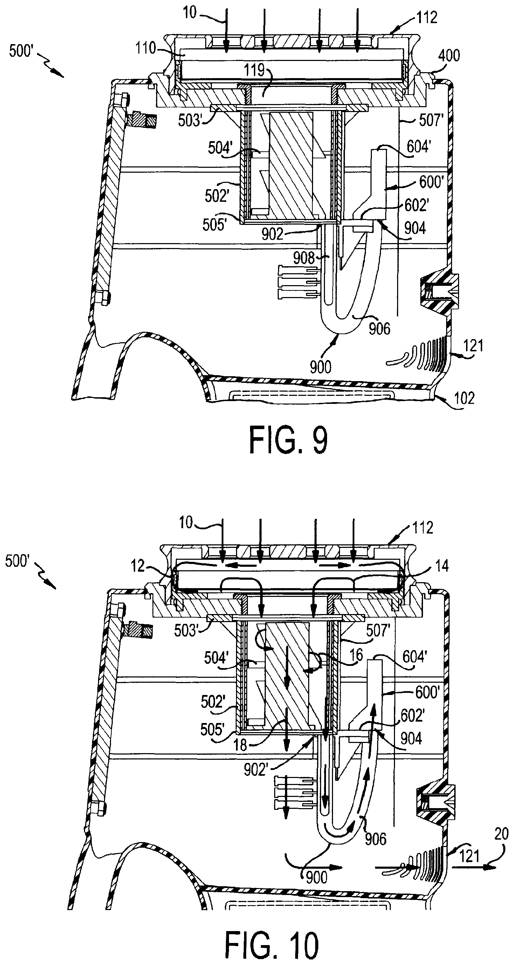

Referring to FIGS. 9 and 10, an alternative blower assembly 500' is shown according to the claimed invention. The blower assembly 500' according to the claimed invention is similar to the blower assembly 500 of the above embodiment, except that a flow connection 900 is added to connect the blower assembly 500' to a mass flow meter 600' such that the mass flow meter 600' is in flow communication with blower assembly 500' via flow connection 900. The blower assembly 500' has a plenum 502' and a blower or fan 504' in association with plenum 502'. Like plenum 502 of the above example plenum 502' according to the claimed invention can be a single integral device or multiple separate discrete housings that are coupled together. The plenum 502' may have a top end 503', a bottom end 505', and a longitudinal side or length 507' defined therebetween. The longitudinal length 507' is preferably generally parallel to the longitudinal axis of the sampling device 100. As such, the longitudinal length 507' of plenum 502' may be vertical when the sampling device 100 is vertical or horizontal when the sampling 100 device is horizontal. The top end 503', which may have a lip, can be coupled to the top 112 of the housing 102 and the bottom end 505', which may have a lip, can be coupled to the mass flow meter via the flow connection 900. Plenum 502' is configured to receive air from the retaining assembly 400 and atrium 110 through its top end 503' and generally along its longitudinal length 507'. Fan 504' may operate inside of plenum 502' to pull air directly through the atrium 110 and retaining assembly 400 via the central opening 119.

Flow connection 900 is preferably a conduit arranged between plenum 502' and the mass flow meter 600'. The flow connection 900 has a central opening and is airtight, and for example can be a flexible plastic tube or plenum. The flow connection 900 can have any shape such as circular or square, though preferably has a circular cross-section and a circular central opening. Flow connection 900 is configured to divert a portion or percentage of the air flowing through the blower assembly 500', namely a measuring portion of the air, to be measured by the mass flow meter 600'. The measuring portion of the air is proportional to the air flowing through the blower assembly 500'. Total flow through the plenum is proportional to the ratio of the cross-sectional area between flow connection 900 and the cross-sectional area of plenum end 505', *i.e*. the cross-sectional area of the plenum 502 at the end of the flow connection 900 or at any location where the flow connection 900 is connected with or positioned with respect to the plenum 502. Output from the mass flow meter is a voltage that is proportional to the flow through the meter, that voltage is electronically converted into a digital value and scaled to the desired units for display.

Flow connection 900 generally has a receiving end 902 adapted to couple with the bottom end 505' of plenum 502', an opposite exit end 904 adapted to couple with the mass flow meter 600', and a conduit body 906 therebetween. The receiving end 902 may be mounted about or extend through a hole in the plenum's bottom end 505', for example, to connect the flow connection 900 thereto such that the plenum 502' is in fluid (i.e., flow) communication with conduit body 906. The conduit body 906 may be shaped, e.g. a generally U-shape, such that the receiving and exit ends 902 and 904 are generally at the same height in the housing body, that is the ends are generally aligned with respect to an axis transverse to the longitudinal length 507' of plenum 502'. Exit end 904 may also be mounted to the bottom end 505' of plenum 502' such that it is adjacent plenum 502' and remote from, i.e. not near or adjacent to, the exhaust 121 in the housing. In a preferred embodiment, at least one portion 908 of the conduit body 906 extends below the plenum's bottom end 505' in a direction generally parallel to the longitudinal length 507' of the plenum 502'. Alternatively, the exit end 904 may be positioned near exhaust 121.

The flow connection 900 is elongated and has a longitudinal axis. In one non-limiting embodiment of the invention, the longitudinal axis at the receiving end 902 can be substantially parallel to the longitudinal axis of the plenum 502'. In this manner, and as best shown in FIG. 10, at least a portion of the air flow exiting the plenum 502' at the bottom end 505' continues straight into the central opening of the flow connection 900 without any obstruction, and the remaining air flow exiting the plenum 502' continues out through the exhaust 121 or port, as before. That enables the mass flow meter 600' to get a true and reliable reading of the flow rate through the plenum 502'. The flow connection 900 can have a bend, if needed to fit the mass flow meter 600' in the interior space of the upper chamber 210. Though the flow connection 900 is shown as having a U-shape, any suitable shape can be provided, including that the body 906 be straight without any bend. In addition, in one embodiment, the flow connection 900 can be positioned at the outer perimeter of the plenum 502' just at the lower edge of the bottom end 505' of the plenum 502' (i.e., just inside the side wall of the plenum 502'). However, the flow connection 900 can be positioned at any suitable location at the opening of the plenum 502', including for example inside the plenum 502' or inset closer toward the center of the plenum 502'. In addition, though only a single flow connection 900 and mass flow meter 600' is shown, more than one flow connection 900 and/or mass flow meter 600' can be provided.

### Mass Flow Meter 600

A mass flow meter 600 is also located in the upper chamber 210, and is positioned immediately and directly below the blower assembly 500. The mass flow meter has an input 602 at a top end and an output 604 at a bottom end. The input 602 is coupled to the bottom open end of the plenum 502 and is in unobstructed air communication with the plenum 502. Thus, the mass flow meter 600 directly receives the air flow passing through the plenum 502. If the bottom end of the plenum 502 is larger than the input 602 of the mass flow meter 600, an adapter 603 can optionally be provided to maintain an airtight seal between the bottom of the plenum 502 and the input 602 of the mass flow meter 600, as shown.

The mass flow meter 600 measures the rate of air flow coming into the sampling device 100 through the atrium 110, striking the media plate 114, through the plenum 502, and into the input 602. Once air exits the output 604 of the mass flow meter 600, it enters the upper chamber 210 and exits via the vent 121 in the housing 102.

As shown, the upper chamber 210 contains an operator display and/or control panel 302, the blower assembly 500 and the mass flow meter 600. The control panel 302 is an electronic touch display that enables the user to control operation of the sampling device 100. The control panel 302 is affixed to the housing 102 and can optionally extend into the upper chamber 210, for example. However, the control panel 302 forms an air and/or liquid tight seal with the housing 102 so that air does not leak out of the upper chamber 210.

Referring to FIGS. 9 and 10, an alternative mass flow meter 600' in accordance with the claimed invention is shown. Mass flow meter 600' is coupled to the exit end 904 of flow connection 900 and may be located anywhere in upper chamber 210. In a preferred embodiment, mass flow meter 600' is positioned near or adjacent to plenum 502' and remote from, i.e. not near or adjacent to, the exhaust 121 of the device. Alternatively, mass flow meter 600' may be positioned near exhaust 121. Mass flow meter 600' has an input 602' and an output 604'. The input 602' is configured to couple to exit end 904 of flow connection 900, thereby providing flow communication with plenum 502'. Thus, air flows through plenum 502', then through flow connection 900, and into the input 602' of mass flow meter 600'.

Similar to mass flow meter 600 of the above example mass flow meter 600' measures the rate of air flow. According to the claimed invention, mass flow meter 600' measures the rate of flow of the measured portion of the air coming through flow connection 900. Because the measured portion of the air is proportional to the air coming through the device, i.e. into the atrium 110, striking the media plate 114, through the plenum 502', the detected rate of flow of the measuring portion of the air by mass flow meter 600' represents the rate of flow of the air coming through the sampling device 100. In one non-limiting embodiment of the invention, output from the mass flow meter is a voltage that is proportional to the flow through the meter. That voltage is electronically converted into a digital value and scaled to the desired units for display. Once the measuring portion of the air exits the output 604' of the mass flow meter 600', it enters the upper chamber 210 and exits via the exhaust 121 in the housing 102.

### Electronic Component Assembly 300

All other electronic components 300 (besides the control panel 302, blower assembly 500 and mass flow meter 600) are contained in the lower chamber 250. That provides stability to the sampling device 100 and reduces the width / diameter of the sampling device 100. The electronic component assembly 300 can include, for example, a controller 304, power supply (batteries), and a motor 306. The controller may be a computer or processing device such as a processor or ASIC. The controller 304 operates the fan 504, mass flow meter 600, and control panel 302. It receives 304 operator control signals from the control panel 302, such as to start and stop test, set test parameters (time, flow rate, etc.). The controller 304 also displays information about operation of the sampling device 100 on the control panel 302, such as flow rate, testing time, and remaining test time. The controller 304 can also communicate with remote devices, such as controllers 304 in other sampling device 100 or a personal computer, network or smart phone, either by hard wire or wirelessly.

Thus, the controller 304 runs the fan 504 and the mass flow meter 600 of the air sampling device 100. When the sampling process is engaged, the system attempts to generate the desired flow rate. The mass flow meter 600 continually reports the instantaneous flow rate through the system to the controller 304. The controller 304 evaluates whether the measured flow rate is equal to the desired flow rate (usually 1 cfm). The difference between the desired flow rate and the measured flow rate is known as the error. If the desired flow rate is greater than the measured flow rate, the controller 304 will increase the frequency of fan 504 revolutions to generate a higher flow rate. If the desired flow rate is less than the measured flow rate, the controller 304 will decrease the frequency of the fan 504 revolutions to generate a smaller flow rate. This process may be repeated continuously (many times per second or nonstop) or at regular intervals. The process of evaluating a system's output and modifying the systems input provides a closed-loop control. A proportional-integral-differential ("PID") control algorithm is used by the controller 304 to minimize and maintain a low system error. The air sampling device 100 preferably uses this control method to adjust the fan speed based on the instantaneous flow rate. Accordingly, controller 304 controls the fan 504 speed in real time without delay or manual interaction, based on the real time feedback provided by the mass flow meter 600.

The controller 304 may be networked and connected to the Internet via TCP/IP networking using IEEE 802.3 (wired), IEEE 802.11 (wireless), and IEEE 802.15.4 (wireless for Bluetooth) physical and data link standards. Alternatively, the the controller 304 may receive and send commands remotely through the network. Through the network, the air sampling device 100 can be monitored and controlled remotely using networked devices and applications, such as a processing device (smart phone, computer, etc.). The air sampling device 100 can also export event history to a removable USB flash drive. The flash drive and USB connection terminal can be accessed through a controller access panel 131 (FIG. 1) that is flat and supports the device 100 in a horizontal position. Event history includes sampling events, calibration events, and administrative events. The device 100 may be integrated with the networks and central processing device to facilitate monitoring and control from a central location, such as those shown in U.S. Patent Nos. 9285,792, 9063040, 9046453, and U.S. Patent Publication No. 2016/0061796.

### Ventilation Slots 121 and Port Adapter 650

Referring to FIG. 1, an elongated ventilation slot 121 is located at bottom rear of the upper housing body 120. The ventilation slot 121 can have vertical members that are integrally formed with the housing 102 to create a plurality of slots and provide safety. An exhaust port adapter 650 can optionally be provided that mates with the ventilation slots 121. The adapter 650 has a base 652 and a nozzle 654. The base 652 has the same shape as the ventilation slot 121. The base 652 covers and couples with the slot 121 in an airtight manner to prevent air from leaking out of the housing 102 except through the nozzle 654. The nozzle 654 projects outward from the base 652 and has a center opening that extends through the nozzle 654 and base 652.

A tube can be attached to the nozzle 654 to transport exhausted air to a remote location outside of the clean environment. Accordingly, air from the upper chamber 210 is exhausted through the nozzle 654 and into the tube.

The exhaust port adapter 650 removably mates with the ventilation slots 121 through an exhaust mating mechanism 656. The exhaust mating mechanism 656 can male members (such as spring-biased arms or the like) which slide into and couple with the female ventilation slots 121 and grip the vertical supports. The exhaust nozzle 654 is exemplarily shown as a substantially cylindrical output nozzle, but may be of any shape that allows for the attachment of tubing. The exhaust nozzle 654 may allow for the use of clamps to secure tubing and create an airtight seal. Alternatively, the outside of the exhaust nozzle 654 may be ribbed and tapered to allow for tubing to form an airtight seal by being pushed against it.

Alternatively, the ventilation slot 121 may be an opening in the housing 102 and a separate grill can be provided that is fastened into the slot 121 (such as by a fastening mechanism or friction fit) and can be removed and replaced with an exhaust adapter 650.

Accordingly, the ventilation opening or slot 121 and/or the exhaust port adapter 650 allow for air passing through the air sampling device 100 to exit to the external environment. The air enters through openings in the atrium 110 at the top of the upper body 120, and exits through the ventilation slot 121 at the rear of the upper body 120. The ventilation slot 121 can be positioned at the bottom part at the rear of the upper body 120, to provide a direct and continuous air flow through the sampling device 100.

### Operation - Air Flow

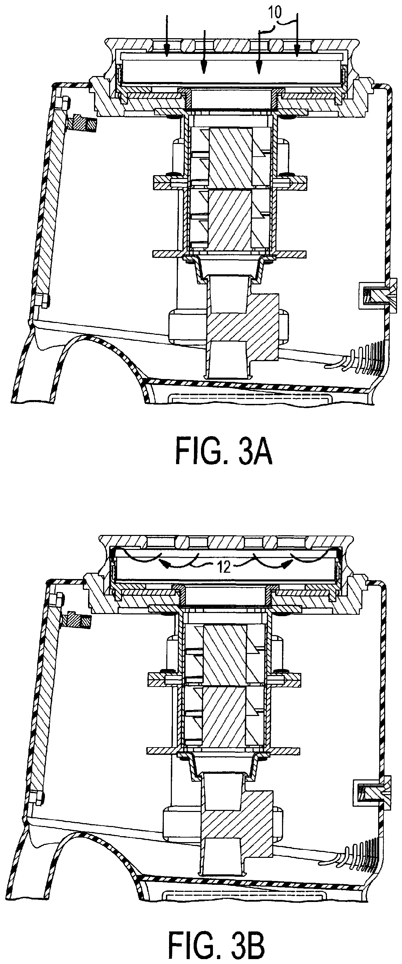

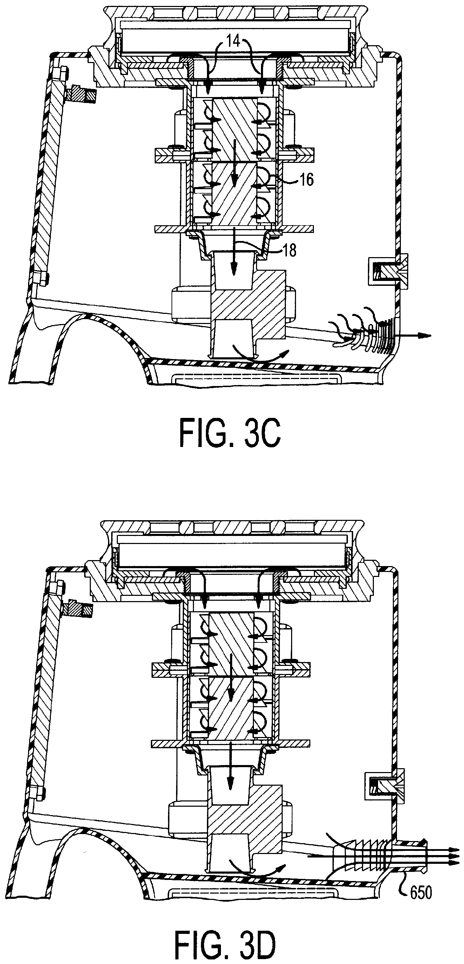

The operation of the air sampling device 100 will now be discussed with respect to FIGS. 2, 3A-3D, and 10. Operation begins when an operator sets a sampling test parameter and presses start, or when a previously set test is programmed to begin (such as every 4 hours). At that point, the controller 304 starts the fan 504 or 504' to operate. The fan 504 or 504' pulls air into the sampling device 100 via the atrium openings 112, as shown by the arrows showing the air flow 10 (FIGS. 3A and 10), and draws air across the agar media plate 114, air flow arrows 12 (FIGS. 3B and 10). The air strikes the media plate 114 and passes around the plate 114, underneath the plate 114 (as shown in FIG. 2, there is a space between the bottom of the media plate 114 and the bottom 402 and also between the bottom of the media plate 114 and the top of the securing member 430) and exits through the central opening 119 in the retaining assembly 400, as shown by air flow arrows 14 (FIGS. 3C and 10).

It is noted that the speed of the air entering the system through each opening 112 is a function of the speed of the fan 504 or 504' as well as the diameter and number of openings 112 in the atrium 110. As air enters the region below the openings 112 (air flow 12, FIGS. 3B and 10), it is redirected toward the nearest vacuum source, the central opening 119. The initial direction of air flow 10 (FIGS. 3A and 10), and the new direction of the air flow 12 (FIGS. 3B and 10), are nearly perpendicular. When the air is redirected, many fast-moving particles within the air cannot be redirected so abruptly due to their inertia. These particles roughly continue their initial direction and impinge the agar media plate 114 where the individual particles remain. The focus of this process is to accumulate these particles within the agar, where they can be analyzed at a later time. The redirected air is drawn laterally outward across the agar-side of the agar media plate 114, over its edges, down the outside of its exterior walls, and laterally inward across the bottom-side of the plate 114 until it is drawn through the central opening 119.

Once the air flow passes through the atrium 110 (air flow 10) and retaining assembly 400 through the central opening 119 (air flow 14), it enters into the plenum 502 or 502' situated inside the upper chamber 210 of the air sampling device 100, as shown by the arrows for air flow 16 (FIGS. 3C and 10). The air enters directly from the central opening 119 into the open top end of the plenum 502 or 502' (air flow 14). The fan 504 or 504' pushes the air through the plenum 502 or 502' (air flow 16) until it exits the open bottom end of the plenum 502 or 502' (air flow 18). The air continues through the adapter 603 (if one is used) to the input 602 of the mass flow meter 600. Alternatively, the measuring portion of the air is diverted through flow connection 900 to the input 602' of the mass flow meter 600'. The mass flow meter 600 or 600' constantly measures the rate of the air flow 18 and provides a measured air flow rate signal with the detected air flow rate to the controller 304. The controller 304 will continuously read the measurement signal and adjust the speed of the fan 504 or 504' to account for any difference between the measured air flow rate and a desired air flow rate.

The air flow continues through the mass flow meter 600 or 600' and exits through the output 604 or 604', as shown by the arrows for air flow 20. As shown in FIGS. 3C and 10, the air flow 20 exits the mass flow meter 600 or 600' into the upper chamber 210. As the upper chamber 210 becomes pressurized (relative to ambient pressure), air is exhausted through the exhaust, e.g. ventilation slot 121 to the exterior of the device 100. The optional partition wall 125 prevents air from entering the lower chamber 250 so that the lower chamber 250 and electronics 300 do not interfere with the air flow. Since the motor 306 is part of the fan assembly 504, it does not need to be cooled. The exhausted air exits the air sampling device 100 substantially parallel to the orientation at which it entered in order to maintain laminar flow within the environment. It is exhausted outside of the sampling device 100 and the housing 102 through the ventilation slot 121 at the rear of the upper chamber 210. Alternatively, a plenum or tube can connect the output 604 or 604' of the mass flow meter 600 or 600' to the ventilation slot 121.

As shown in the example of FIG. 3D, an exhaust plug can replace or be attached to the ventilation slot 121 so that the air flow 20 is exhausted through the port adapter 650. A tube can be connected to the nozzle 654 of the port adapter 650 to transport the air to a remote location outside the clean environment, where it is finally disposed or exhausted. Thus, air passes through the ventilation slot 121 and/or the port adapter 650 and is redirected into the attached tubing.

It is noted that the sampling device 100 and its various components, are shown to have a generally cylindrical shape. For instance, the atrium 110, retaining assembly 400, top plate 420, bottom plate 402, media plate 114, securing member 430, and blower assembly 212 are all cylindrical.

In addition, the sampling device 100 includes operation by a one or more processing devices, such as the controller 304. It is noted that the processing device can be any suitable device, such as a processor, microprocessor, PC, tablet, smartphone, or the like. The processing devices can be used in combination with other suitable components, such as a display device (monitor, LED screen, digital screen, etc.), memory or storage device, input device (touchscreen, keyboard, pointing device such as a mouse), wireless module (for RF, Bluetooth, infrared, WiFi, Zigbee, etc.). Information operated on or output by the processing device may be stored on a hard drive, flash drive, on a CD ROM disk or on any other appropriate data storage device, which can be located at or in communication with the processing device. The entire process is conducted automatically by the processing device, and without any manual interaction. Accordingly, unless indicated otherwise the process can occur substantially in real time without any delays or manual action.

The air sampling device 100 is especially useful for use in a controlled environment. It can be made of materials that are suitable for use in a controlled environment. However, the sampling device 100 can be utilized in other environments.

## Claims

1. An air sampling device (100) for sampling air, comprising:
a housing body (102) having an opening (119);
a retaining assembly (400) configured to retain a sampling device (110), the retaining assembly (400) located at the opening (119);
a plenum (502') having a first end (503') and a second end (505') which is opposite to the first end (503'), the first end (503') being coupled to the housing body (102) at the opening (119) such that the plenum (502') is in flow communication with the opening (119),
a flow connection (900) coupled to the plenum (502') such that the flow connection (900) is in flow communication with the plenum (502'), wherein the flow connection (900) is a conduit that has a receiving end (902) that is coupled to the second end (505') of the plenum (502') and an opposite exit end (904) that is coupled to an input (602') of a mass flow meter (600'), wherein the
mass flow meter (600') is coupled to the flow connection (900) such that the mass flow meter (600') is in flow communication with the plenum (502') via the flow connection (900); and
a blower (504') located inside of the plenum (502') and configured to draw air past the sampling device (110), through the opening (119) of the housing body (102), through the plenum (502') from the first end (503') to the second end (505') along a longitudinal length (507') of the plenum (502'), and then through the mass flow meter (600'), wherein the mass flow meter (600') is configured to measure the flow rate of the air drawn through the flow connection (900).

2. The air sampling device (100) of claim 1, wherein the conduit is a flexible tube.

3. The air sampling device (100) of claim 1, wherein the longitudinal length (507') of the plenum (502') is generally parallel to a longitudinal axis of the air sampling device.

4. The air sampling device (100) of claim 1, wherein the mass flow meter (600') is configured to measure the flow rate of a measuring portion of the air drawn through the flow connection (900), wherein the measuring portion of the air is proportional to the air flowing through the plenum (502') and a total flow through the plenum (502') is ratiometically related to the flow through the measuring portion based on the ratio of the cross-sectional area of the flow connection (900) and the plenum end (505').

5. The air sampling device (100) of claim 1, wherein the housing body (102) includes an exhaust (121).

6. The air sampling device (100) of claim 5, wherein the flow connection (900) has a receiving end (902) and an opposite exit end (904), and both the receiving and exit ends (902, 904) of the flow connection (900) are remote from the exhaust (121) of the housing body (102).

7. The air sampling device (100) of claim 1, wherein the receiving and exit ends (902, 904) are generally aligned with the second end (505') of the plenum (502') with respect to an axis transverse to a longitudinal length of the plenum (502').

8. The air sampling device (100) of claim 1, wherein the exit end (904) is mounted to the second end (505') of the plenum (502').

9. The air sampling device of claim 1, wherein a portion of the flow connection (900) extends below the second end (505') of the plenum (502') in a direction generally parallel to a longitudinal length of the plenum (502').

10. The air sampling device (100) of claim 1, wherein the flow connection (900) has a generally U-shape.

11. The air sampling device (100) of claim 1, further comprising a processing device (304) connected to both the mass flow meter (600') and the blower (504'), the processing device (304) being adapted to receive a detected flow rate from the mass flow meter (600') and controlling a speed of the blower (504') in response to the detected flow rate.

12. The air sampling device (100) of claim 11, wherein the processing device (304) increases the speed of the blower (504') if the detected flow rate is lower than a desired flow rate, or decreases the speed of the blower (504') if the detected flow rate is higher than a desired flow rate.

## Patentansprüche

1. Eine Luftprobenentnahmevorrichtung (100) zur Entnahme von Luftproben, umfassend:
einen Gehäusekörper (102) mit einer Öffnung (119);
eine Halteanordnung (400), welche dazu ausgebildet ist, eine Probenahmevorrichtung (110) festzuhalten, wobei die Halteanordnung (400) bei der Öffnung (119) angeordnet ist;
einen Sammelraum (502') mit einem ersten Ende (503') und einem zweiten Ende (505'), welches gegenüber dem ersten Ende (503') ist, wobei das erste Ende (503') derart mit dem Gehäusekörper (102) bei der Öffnung (119) verbunden ist, dass der Sammelraum (502') in Strömungsverbindung mit der Öffnung (119) steht,
eine Durchflussverbindung (900), welche derart mit dem Sammelraum (502') verbunden ist, dass die Strömungsverbindung (900) in Strömungskommunikation mit dem Sammelraum (502') steht, worin die Durchflussverbindung (900) eine Leitung ist, welche ein Empfangsende (902) aufweist, das mit dem zweiten Ende (505') des Sammelraums (502') verbunden ist, und ein gegenüberliegendes Ausgangsende (904), das mit einem Eingang (602') eines Massendurchflussmessers (600') verbunden ist, worin der Massendurchflussmesser (600') derart mit der Durchflussverbindung (900) gekoppelt ist, dass der Massendurchflussmesser (600') über die Durchflussverbindung (900) in Strömungsverbindung mit dem Sammelraum (502') steht; und
ein Gebläse (504'), welches sich innerhalb des Sammelraums (502') befindet und dazu konfiguriert ist, um Luft vorbei an der Probenahmevorrichtung (110), durch die Öffnung (119) des Gehäusekörpers (102), durch den Sammelraum (502') vom ersten Ende (503') zum zweiten Ende (505') entlang einer longitudinalen Länge (507') des Sammelraums (502') und dann durch den Massendurchflussmesser (600') zu leiten, worin der Massendurchflussmesser (600') dazu konfiguriert ist, die Durchflussrate der durch die Durchflussverbindung (900) angesaugten Luft zu messen.

2. Luftprobenentnahmevorrichtung (100) gemäss Anspruch 1, worin die Leitung ein flexibler Schlauch ist.

3. Luftprobenentnahmevorrichtung (100) gemäss Anspruch 1, worin die longitudinale Länge (507') des Sammelraums (502') im Wesentlichen parallel zu einer Längsachse der Luftprobenentnahmevorrichtung verläuft.

4. Luftprobenentnahmevorrichtung (100) gemäss Anspruch 1, worin der Massendurchflussmesser (600') dazu konfiguriert ist, die Strömungsrate eines Messanteils der durch die Strömungsverbindung (900) angesaugten Luft zu messen, worin der Messanteil der Luft proportional zur durch den Sammelraum (502') strömenden Luft ist und ein Gesamtdurchfluss durch den Sammelraum (502') in einem proportionalen Verhältnis zum Durchfluss durch den Messanteil steht, basierend auf dem Verhältnis der Querschnittsfläche der Strömungsverbindung (900) und des Sammelraumendes (505').

5. Luftprobenentnahmevorrichtung (100) gemäss Anspruch 1, worin der Gehäusekörper (102) einen Auslass (121) umfasst.

6. Luftprobenentnahmevorrichtung (100) gemäss Anspruch 5, worin die Strömungsverbindung (900) ein Aufnahmeende (902) und ein gegenüberliegendes Ausgangsende (904) aufweist, und sowohl das Aufnahme- als auch das Ausgangsende (902, 904) der Strömungsverbindung (900) vom Auslass (121) des Gehäusekörpers (102) beabstandet sind.

7. Luftprobenentnahmevorrichtung (100) gemäss Anspruch 1, worin die Aufnahme- und Austrittsenden (902, 904) im Allgemeinen mit dem zweiten Ende (505') des Sammelraums (502') in Bezug auf eine Achse quer zu einer longitudinalen Länge des Sammelraums (502') ausgerichtet sind.

8. Luftprobenentnahmevorrichtung (100) gemäss Anspruch 1, wobei das Austrittsende (904) am zweiten Ende (505') des Sammelraums (502') angebracht ist.

9. Luftprobenentnahmevorrichtung (100) gemäss Anspruch 1, worin sich ein Teil der Strömungsverbindung (900) unterhalb des zweiten Endes (505') des Sammelraums (502') in einer Richtung erstreckt, die im Wesentlichen parallel zu einer longitudinalen Länge des Sammelraums (502') verläuft.

10. Luftprobenentnahmevorrichtung (100) gemäss Anspruch 1, worin die Strömungsverbindung (900) im Wesentlichen eine U-Form aufweist.

11. Luftprobenentnahmevorrichtung (100) gemäss Anspruch 1, zudem mit einer Verarbeitungsvorrichtung (304), welche sowohl mit dem Massendurchflussmesser (600') als auch mit dem Gebläse (504') verbunden ist, wobei die Verarbeitungsvorrichtung (304) dazu ausgelegt ist, eine erfasste Durchflussrate vom Massendurchflussmesser (600') zu empfangen und eine Geschwindigkeit des Gebläses (504')in Abhängigkeit von der erfassten Durchflussrate zu steuern.

12. Luftprobenentnahmevorrichtung (100) gemäss Anspruch 11, worin die Verarbeitungsvorrichtung (304) die Geschwindigkeit des Gebläses (504') erhöht, wenn die erfasste Durchflussrate niedriger als eine gewünschte Durchflussrate ist, oder die Geschwindigkeit des Gebläses (504') verringert, wenn die erfasste Durchflussrate höher als eine gewünschte Durchflussrate ist.

## Revendications

1. Un dispositif d'échantillonnage d'air (100) pour échantillonner l'air, comprenant :
un corps de boîtier (102) possédant une ouverture (119);
un ensemble de retenue (400) configuré pour retenir un dispositif d'échantillonnage (110), l'ensemble de retenue (400) étant placé au niveau de l'ouverture (119);
un plénum (502') ayant une première extrémité (503') et une deuxième extrémité (505') qui est opposée à la première extrémité (503'), la première extrémité étant couplée au corps de boîtier (102) au niveau de l'ouverture (119) en sorte que le plénum (502') est en communication fluidique avec l'ouverture (119),
une connexion fluidique (900) couplée au plénum (502') en sorte que la connexion fluidique (900) est en communication fluidique avec le plénum (502'), où la connexion fluidique (900) est un conduit possédant une extrémité de réception (902) qui est couplé avec la deuxième extrémité (505') du plénum (502') et une extrémité de sortie opposée (904) qui est couplée à une ntrée (602') d'un débitmètre massique (600'), où le débitmètre massique (600') est couplé à la connexion fluidique (900) en sorte que le débitmètre massique (600') est en communication fluidique avec le plénum (502') via la connexion fluidique (900) ; et
un ventilateur (504') situé à l'intérieur du plénum (502') et configuré pour conduire l'air par-delà le dispositif d'échantillonnage (110), à travers l'ouverture (119) du corps de boîtier (102), à travers le plénum (502') de la première extrémité (503') à la deuxième extrémité (505') le long d'une longueur longitudinale (507') du plénum (502'), et ensuite à travers le débitmètre massique (600'), où le débitmètre massique (600') est configuré pour mesurer le débit de l'air à travers la connexion fluidique (900).

2. Le dispositif d'échantillonnage d'air (100) de la revendication 1, où le conduit est un tube flexible.

3. Le dispositif d'échantillonnage d'air (100) de la revendication 1, où la longueur longitudinale (507') du plénum (502') est essentiellement parallèle à un axe longitudinal du dispositif d'échantillonnage d'air (100).

4. Le dispositif d'échantillonnage d'air (100) de la revendication 1, où le débitmètre massique (600') est configuré pour mesurer le débit d'une portion de esure de l'air conduit à travers la connexion fluidique, où la portion de mesure de l'air est proportionnelle à l'air circulant à travers le plénum (502') et un débit total à travers le plénum (502') est lié ratiométriquement au débit à travers la portion de mesure sur la base du rapport de la surface transversale de la connexion fluidique (900) et de l'extrémité de plénum (505').

5. Le dispositif d'échantillonnage d'air (100) de la revendication 1, où le corps de boîtier (102) inclut un échappement (121).

6. Le dispositif d'échantillonnage d'air (100) de la revendication 5, où la connexion fluidique (900) a une extrémité de réception (902) et une extrémité de sortie opposée (904), et les extrémités de réception et de sortie (902, 904) sont toutes deux à distance de l'échappement (121) du corps de boîtier (102).

7. Le dispositif d'échantillonnage d'air (100) de la revendication 1, où les extrémités de réception et de sortie (902, 904) sont essentiellement alignées avec la deuxième extrémité (505') du plénum (502') par rapport à un axe transverse à une longueur longitudinale du plénum (502').

8. Le dispositif d'échantillonnage d'air (100) de la revendication 1, où l'extrémité de sortie (904) est montée à la deuxième extrémité (505') du plénum (502').

9. Le dispositif d'échantillonnage d'air (100) de la revendication 1, où une portion de la connexion fluidique (900) s'étend sous la deuxième extrémité (505') du plénum (502') dans une direction essentiellement parallèle à une longueur longitudinale du plénum (502').

10. Le dispositif d'échantillonnage d'air (100) de la revendication 1, où la connexion fluidique (900) a essentiellement une forme en U.

11. Le dispositif d'échantillonnage d'air (100) de la revendication 1, comprenant en outre un dispositif de traitement (304) connecté au débitmètre massique (600') ainsi qu'au ventilateur (504'), où le dispositifde traitement (304) est adapté pour recevoir un débit détecté par le débitmètre massique (600') et contrôler une vitesse du ventilateur (504') en réponse au débit détecté.

12. Le dispositif d'échantillonnage d'air (100) de la revendication 11, où le dispositif de traitement (304) augmente la vitesse du ventilateur (504') si le débit détecté est inférieur à un débit souhaité, ou réduit la vitesse du ventilateur (504') si le débit détecté est supérieur à un débit souhaité.
